# EUROPEAN PATENT APPLICATION

(11) **EP 4 083 127 A1**
(43) Date of publication of application: **02.11.2022**
(21) Application number: 20907643.9
(22) Date of filing: 23.12.2020
(51) Int. Cl.: C08K 5/057, C08L 83/05, C08L 83/07

(54) **CURABLE ORGANOPOLYSILOXANE COMPOSITION, CURED PRODUCT THEREOF, PROTECTIVE AGENT OR ADHESIVE, AND ELECTRIC/ELECTRONIC DEVICE**

(30) Priority: 26.12.2019 US 201962953589 P
(71) Applicant: Dow Toray Co., Ltd., Tokyo 140-8617 (JP); Dow Silicones Corporation, Midland, MI 48686-0994 (US)
(72) Inventor: TODA, Nohno, Ichihara-shi, Chiba 299-0108 (JP); SUTOH, Manabu, Ichihara-shi, Chiba 299-0108 (JP); SUNDERLAND, Julia, Auburn, Michigan 48611 (US); SOOTSMAN, Joseph Ronald, Auburn, Michigan 48611 (US); KRUEGER, Steven Timothy, Auburn, Michigan 48611 (US); SHEPHARD, Nick Evan, Auburn, Michigan 48611 (US)
(74) Representative: Murgitroyd & Company
(86) International application number: PCT/JP2020/048195
(87) International publication number: WO 2021/132345

(57) **Abstract**

PROBLEM

To provide a curable organopolysiloxane composition that is one component, has superior storage stability, favorable curability and adhesion at relatively low temperatures, and an appropriate usable time. In particular, to provide a curable organopolysiloxane composition with superior curability even at temperatures of 80°C or lower and superior adhesion to resins such as polyester and polyphenylene sulfide.

RESOLUTION MEANS

A one-component curable organopolysiloxane composition, comprising the following components (A) - (E):
(A) an organopolysiloxane having at least two alkenyl groups in each molecule thereof;
(B) an organopolysiloxane having at least two silicon atom-bonded hydrogen atoms in a molecule;
(C) a hydrosilylation reaction catalyst;
(D) a condensation reaction catalyst or a condensation reaction product thereof selected from a group consisting of tetra-tert-butoxy titanium, di(isopropoxy)bis(ethyl acetoacetate)titanium, and an aluminum chelate complex; and
(E) a curing inhibitor;
that when cured, provides a silicone rubber composition with a JIS A hardness of 5 or higher. The composition may optionally include a large amount of (H) inorganic filler or the like.

## Description

### [TECHNICAL FIELD]

The present invention is related to a curable organopolysiloxane composition and cured product thereof, protective agents or adhesives, and electrical and electronic equipment.

### [BACKGROUND ART]

Curable organopolysiloxane compositions are widely used as protective agents or adhesives for electrical and electronic components. As a protective agent or adhesive for electrical and electronic parts, having superior reliability and durability is important and in particular, having superior self-adhesiveness when coming into contact with a base material prior to being fully cured is required. In recent years, electrical and electronic parts have become smaller in size, more versatile, and lighter, and the shapes of the electrical and electronic parts have become complex in accordance with their applications. Therefore, the curable organopolysiloxane may be used in a protective form or an adhesive form different from a conventional form, such as adhesion by means of a small amount thereof and adhesion by means of thin film form.

Patent Document 1 discloses a composition including a specific organopolysiloxane containing an alkoxysilyl group and an alkenyl group that is a curable organopolysiloxane that can be satisfactorily adhered to unwashed aluminum die cast, PPS resin, or the like. However, the composition disclosed in Patent Document 1 cannot be cured unless heated to about 100°C. Depending on the base material, there were cases where superior adhesiveness was not obtained. Furthermore, when used as an adhesive in a thin film, sufficient initial adhesiveness and adhesive strength may not be obtained.

In order to provide a curable organopolysiloxane composition having lower temperature curability and excellent self-adhesiveness, Patent Document 2 discloses a curable organopolysiloxane composition that uses both a hydrosilylation reaction catalyst and a condensation reaction catalyst at the same time and includes a siloxane containing a specific trialkoxysilyl. However, since the composition disclosed in Patent Document 2 is a two-component type, mixing the two liquids immediately before use is necessary. In addition, the usable time after mixing was short, resulting in handling and stability problems.

Patent document 3 discloses a self-adhesive silicone gel composition containing a platinum-based catalyst and a specific titanium compound and/or a partial hydrolysis condensation product thereof. However, since the composition disclosed in Patent Document 3 is gelatinous, obtaining sufficient adhesive strength for electrical and electronic components was not feasible, and the composition could not be used for applications requiring elastomer properties. In addition, patent document 4 discloses a curable organopolysiloxane composition containing alkoxysilanes as crosslinking agents and silanol-modified siloxanes, in addition to the simultaneous use of hydrosilylation reactions catalysts and condensation reactions catalysts. However, the main agent thereof was not an organopolysiloxane containing an alkenyl group, and the composition did not cure in a sufficiently short period of time unless at a temperature of 120°C or higher and adhesion to a base material was insufficient.

### [Prior Art Documents]

### [Patent Documents]

[Patent Document 1] JP 2006-348119 A
Patent Document 2: WO 2018/043270
Patent Document 3: Japanese Unexamined Patent Application No. 2018-119021
Patent Document 4: U.S. Patent Application Publication No. 2014/0356620 Specification

### [SUMMARY OF THE INVENTION]

### [PROBLEMS TO BE SOLVED BY THE INVENTION]

In order to resolve the conventional technical problems described above, an object of the present invention is to provide a curable organopolysiloxane composition that is one component, has superior storage stability, favorable curability and adhesion at relatively low temperatures for practical use, and an appropriate usable time. In particular, the purpose is to provide a curable organopolysiloxane composition with superior curability at a temperature of 80°C or lower and superior adhesion when cured at low temperature to difficult-to-bond-to resins such as polycarbonate or polyphenylene sulfide as well as to metal base materials.

In addition, an object of the present invention is to provide a protective agent or adhesive containing the curable organopolysiloxane composition described above, cured product thereof, and electrical or electronic equipment. In particular, an object of the present invention is use of the curable organopolysiloxane composition of the present invention enabling providing electrical or electronic components with superior reliability and durability and thus providing superior electrical or electronic equipment thereof.

### [MEANS FOR SOLVING THE PROBLEMS]

As a result of conducting diligent research on the problems described above, the present inventors arrived at the present invention. In other words, the object of the present invention is achieved by a one-component curable organopolysiloxane composition, including the following components (A) - (E):
(A) an organopolysiloxane having at least two alkenyl groups in each molecule thereof;
(B) an organopolysiloxane having at least two silicon atom-bonded hydrogen atoms in a molecule;
(C) a hydrosilylation reaction catalyst;
(D) a condensation reaction catalyst or a condensation reaction product thereof selected from a group consisting of tetra-tert-butoxy titanium, di(isopropoxy)bis(ethyl acetoacetate)titanium, and an aluminum chelate complex; and
(E) a curing inhibitor;
that when cured, provides a silicone rubber composition with a JIS A hardness of 5 or higher.

The (B) component is preferably contained in an amount such that the molar ratio of silicon atom-bonded hydrogen atoms relative to alkenyl groups in the total composition of the curable organopolysiloxane composition is in a range of 0.3 to 10.

The content of component (D) is preferably 0.5 mass% or less relative to the total mass of the curable organopolysiloxane composition. Note that the di(isopropoxy)bis(ethyl acetoacetate)titanium is advantageous in that a suitable effect can be achieved even at amounts of less than 0.1 mass%.

The content of the compound having an intramolecular carbon-carbon triple bond in component (E) is preferably 0.001 to 0.5 mass% relative to the total mass of the curable organopolysiloxane composition.

The curable organopolysiloxane composition of the present invention can further include one silicon atom-bonded hydrogen atom in a (F) molecule and a trialkoxysilyl containing siloxane having at least one trialkoxysilyl group, where

component (F) is preferably a trialkoxysilyl containing siloxane expressed by the following formula: 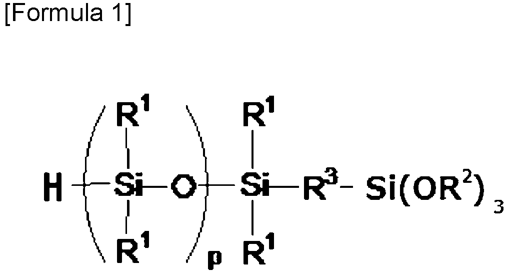 (where R¹ is the same or different monovalent hydrocarbon group not having an aliphatic unsaturated bond, R² is an alkyl group, R³ is an alkylene group, and p is an integer of from 1 to 50).

The content of component (F) is preferably 0.05 to 10 mass% or less relative to the total mass of the curable organopolysiloxane composition.

The curable organopolysiloxane composition of the present invention can further include (G) an adhesion promoting agent. The curable organopolysiloxane composition of the present invention can further include (H) an inorganic filler.

In particular, electrically conductive fillers can be included, and silver particles or silver-coated alumina or glass microparticles are suitable.

Curing of the curable organopolysiloxane composition of the present invention is preferably feasible at a temperature of 80°C or less.

The present invention is related to a protective agent or adhesive for an electrical or electronic component, containing the curable organopolysiloxane composition of the present invention.

The present invention is related to an electrically conductive or thermally conductive curable composition, containing the curable organopolysiloxane composition of the present invention.

The present invention also relates to a cured product of the curable organopolysiloxane composition of the present invention.

The present invention also relates to electrical or electronic equipment containing the cured product of the present invention.

The present invention is also related to electrical or electronic equipment, where electrical or electronic components are adhered, encapsulated, or sealed with the curable organopolysiloxane composition of the present invention.

### [EFFECTS OF THE INVENTION]

The curable organopolysiloxane composition of the present invention is one component and so storage stability is superior if stored, readily hardens at a relatively low temperature of 80°C or lower, and exhibits superior adhesiveness. In particular, the composition exhibits superior adhesion to difficult-to-bond-to resins such as polycarbonate and polyphenylene sulfide as well as to metal base materials such as aluminum even at low temperature conditions. Furthermore, even if large amounts of inorganic fillers (especially conductive fillers such as silver) are mixed in, the composition exhibits superior adhesion to resin and metal base materials.

In addition, use of the curable organopolysiloxane composition of the present invention enables maintaining reliability and durability of electrical or electronic components over a long period of time as well as exhibiting superior adhesiveness. In addition, the curable organopolysiloxane composition of the present invention can be used as a thermally conductive material or electrically conductive material with excellent adhesion to the base material.

### [MODE FOR CARRYING OUT THE INVENTION]

The curable organopolysiloxane composition of the present invention is a one-component curable organopolysiloxane composition, including the following components (A) - (E):
(A) an organopolysiloxane having at least two alkenyl groups in each molecule thereof;
(B) an organopolysiloxane having at least two silicon atom-bonded hydrogen atoms in a molecule;
(C) a hydrosilylation reaction catalyst;
(D) a condensation reaction catalyst or a condensation reaction product thereof selected from a group consisting of tetra-tert-butoxy titanium, di(isopropoxy)bis(ethyl acetoacetate)titanium, and an aluminum chelate complex; and
(E) a curing inhibitor;
that when cured, provides a silicone rubber composition with a JIS A hardness of 5 or higher.

### [Component (A)]

Component (A) is an organopolysiloxane serving as a main component of the composition of the present invention and having at least two alkenyl groups in each molecule thereof. In this manner, component (A) includes one or two or more types of organopolysiloxanes containing alkenyl groups. This component (A) is preferably an organopolysiloxane having at least two alkenyl groups per one molecule and not having the below-mentioned alkoxysilyl containing group in a molecule, with component (A) preferably added to the composition without being reacted with component (F), described below, in advance.

(The molecular structure of component (A) is not particularly limited and includes, for example, straight chain, branched chain, cyclic, threedimensional network structures, and combinations thereof. Examples of a silicon atom-bonded alkenyl group in component (A) include: a vinyl group, an allyl group, a butenyl group, a pentenyl group, and a hexenyl group, with a vinyl group and hexenyl group being preferable. While not particularly limited thereto, examples of bonding positions of this alkenyl group may include a molecular chain terminal and/or a molecular chain side chain. Examples of groups bonded to silicon atoms other than alkenyl groups in component (A) include: alkyl groups such as methyl groups, ethyl groups, propyl groups, butyl groups, pentyl groups, hexyl groups, heptyl groups, and the like; aryl groups such as phenyl groups, tolyl groups, xylyl groups, naphthyl groups, and the like; aralkyl groups such as benzyl groups, phenethyl groups, and the like; and halogenated alkyl groups such as chloromethyl groups, 3-chloropropyl groups, and 3,3,3-trifluoropropyl groups, and the like and other substituted or unsubstituted monovalent hydrocarbon groups, with methyl groups or phenyl groups being particularly preferred. Component (A) may be a mixture of two or more having these molecular structures. In particular, the molecular structure of component (A) should be chain-like (including straight chain and branched chain) or resinous. Moreover, while not particularly limited thereto, the viscosity of component (A) at 25°C is, for example, preferably within the range of 20 to 1,000,000 mPa-s, particularly preferably within the range of 100 to 100,000 mPa-s. This is because, if the viscosity at 25°C is less than the lower limit of the abovementioned range, the physical properties of the obtained cured product, particularly flexibility and elongation, may significantly decrease; in contrast, if the viscosity exceeds the upper limit of the abovementioned range, the viscosity of the obtained composition may increase, significantly deteriorating the handleability.

Of this manner of component (A), examples of straight chain organopolysiloxanes include:
copolymers of dimethylsiloxanes and methylvinylsiloxanes capped at both molecular terminals with trimethylsiloxy groups,
copolymers of dimethylsiloxane, methylvinylsiloxane, and methylphenylsiloxane capped at both molecular terminals with trimethylsiloxy groups,
dimethylpolysiloxanes capped at both molecular terminals with dimethylvinylsiloxy groups,
methylphenylpolysiloxanes capped at both molecular terminals with dimethylvinylsiloxy groups,
copolymers of dimethylsiloxane and methylvinylsiloxane capped at both molecular terminals with dimethylvinylsiloxy groups,
copolymers of dimethylsiloxane and methylvinylsiloxane capped at both molecular terminals with dimethylphenylsiloxy groups,
copolymers of dimethylsiloxane, methylvinylsiloxane, and diphenylsiloxane capped at both molecular terminals with trimethylsiloxy groups,
copolymers of dimethylsiloxane and diphenylsiloxane capped at both molecular terminals with dimethylphenylsiloxy groups, and
dimethylpolysiloxanes capped at both molecular terminals with methylvinylphenylsiloxy groups.

Of this manner of component (A), examples of resinous organopolysiloxanes include organopolysiloxanes having many branched siloxane units that are T units or Q units such as arbitrary combinations of:
triorganosiloxy units (M units) (organo groups are groups selected from alkyl groups such as methyl groups, aryl groups such as phenyl groups, and alkenyl groups such as vinyl groups, same hereinafter);
diorganosiloxy units (D units) (organo groups are groups selected from alkyl groups, aryl groups, and alkenyl groups);
monoorganosiloxy units (T units) (organo units are groups selected from alkyl groups, aryl groups, and alkenyl groups); and
siloxy groups (Q units);
thus constituting MQ resins, MDQ resins, MTP resins, MDTQ resins, TD resins, TQ resins, and TDQ resins. Note that component (A) has at least two alkenyl groups in the molecule, and may include a silanol group or an alkoxy group as well in addition to the siloxane unit described above.

### [Component (B)]

Component (B) is a crosslinking agent according to the present invention and is an organopolysiloxane having at least two silicon atom-bonded hydrogen atoms per one molecule. Component (B) reacts with component (A) to form a crosslinked structure in the cured material, which achieves flexibility, strength, and strong adhesion to the base material (adhesion durability).

Examples of the molecular structure of component (B) include: straight chain, partially branched straight chain, branched chain, cyclic, and three dimensional network structures, and combinations of these. Examples of the bond positions of the hydrogen atoms bonded to silicon atoms in component (B) are molecular chain terminals and/or molecular side chains. Examples of groups bonding to the silicon atoms other than hydrogen atoms in component (B) include: alkyl groups such as methyl groups, ethyl groups, propyl groups, butyl groups, pentyl groups, hexyl groups, heptyl groups, and the like; aryl groups such as phenyl groups, tolyl groups, xylyl groups, naphthyl groups, and the like; aralkyl groups such as benzyl groups and phenethyl group; halogenated alkyl groups such as chloromethyl groups, 3-chloropropyl groups, and 3,3,3-trifluoropropyl groups; and other substituted or unsubstituted monovalent hydrocarbon groups and methyl groups or phenyl groups are in particular preferable. Furthermore, the viscosity of component (B) is not limited, but the viscosity at 25°C should be within a range of 1 to 1,000 mPa-s, preferably 1 to 500 mPa-s. Furthermore, low molecular weight siloxane oligomers (octamethyltetrasiloxane, decamethylpentasiloxane) may be reduced or eliminated from the perspective of preventing contact damage.

Examples of a straight chain component (B) include:
dimethylpolysiloxanes capped at both molecular terminals with dimethylhydrogensiloxy groups,
methylphenylpolysiloxanes capped at both molecular terminals with dimethylhydrogensiloxy groups,
copolymers of dimethylsiloxane and methylphenylsiloxane capped at both molecular terminals with dimethylhydrogensiloxy groups,
diphenylpolysiloxanes capped at both molecular terminals with dimethylhydrogensiloxy groups,
methylhydrogen polysiloxanes capped at both molecular terminals with trimethylsiloxy groups,
copolymers of methylhydrogen siloxane and dimethylsiloxane capped at both molecular terminals with trimethylsiloxy groups,
copolymers of methylhydrogen siloxane and dimethylsiloxane capped at both molecular terminals with dimethylhydrogensiloxy groups, and mixtures of two or more types of these organopolysiloxanes.

Cyclic component (B) is a polysiloxane configured by diorganosiloxy units and having at least two methylhydrogen siloxy units (CH₃(H)SiO_{2/2}), with examples thereof suitably including a cyclic trisiloxane (trimer), cyclic tetrasiloxane (tetramer), and cyclic pentasiloxane (pentamer). As other diorganosiloxy units, these cyclic siloxanes may be a cyclic siloxane containing one or more siloxy units selected from alkoxymethylsiloxane units (CH₃(Alkoxy)SiO_{2/2}), epoxy methylsiloxy units (CH₃(Epoxy)SiO_{2/2}), dimethylsiloxy units ((CH₃)₂SiO_{2/2}), diphenylsiloxy units ((C₆H₅)₂SiO_{2/2}), and phenylmethylsiloxy units ((C₆H₅)(CH₃)SiO_{2/2}).

The resinous or three dimensional network type (B) component may be, for example, an organohydrogen polysiloxane expressed by the following average composition formula.

(HR₂SiO_{1/2})ₑ(R₃SiO_{1/2})_{f}(HRSiO_{2/2})_{g}(R₂SiO_{2/2})ₕ(HSiO_{3/2})ᵢ(RSiO_{3/2})ⱼ(SiO_{4/2})ₖ(R'O_{1/ 2})ₗ

In the aforementioned average composition formula, R represents a group selected from monovalent saturated hydrocarbon groups having 1 to 12 carbon atoms and not having an aliphatic unsaturated bond, hydroxyl groups, or alkoxy groups. The monovalent saturated hydrocarbon group having 1 to 12 carbon atoms, the hydroxyl groups, and the alkoxy groups are the same as described above. R represents a hydrogen atom or an alkyl group having 1 to 6 carbon atoms, and examples of an alkyl group having 1 to 6 carbon atoms include methyl groups, ethyl groups, propyl groups, butyl groups, hexyl groups, and the like. e, f, g, h, i, j, k, and I are numbers that satisfy the following conditions: e + f + g + h + i + j + k = 1, 0 ≤ l ≤ 0.1, and 0 < i + j + k ≤ 1.0.

Note, each of the structural units "HR₂SiO_{1/2}", "R₃SiO_{1/2}", "HRSiO_{2/2}", "R₂SiO_{2/2}", "HSiO_{3/2}", "RSiO_{3/2}" and "SiO_{4/2}" are partial structure units of organohydrogen polysiloxanes called M^{H} units, M units, D^{H} units, D units, T^{H} units, T units, and Q units respectively. The resinous or three dimensional network type (B) component includes a branched unit selected from TH units, T units, and Q units in the molecule. "R^{'}O_{1/2}" is a group that bonds with an oxygen atom in a D unit, DH unit, T unit, T^{H} unit, or Q unit and refers to silicon atom bonded hydroxyl groups (Si-OH) in organopolysiloxanes or silicon-bonded alkoxy groups remaining unreacted in manufacturing of organopolysiloxanes. The M^{H} units are primarily present at an end of a molecular chain of an organohydrogen polysiloxane, and D^{H} units are present in a molecular chain of the organohydrogen polysiloxane.

For practical purposes, suitable examples of resinous or three dimensional network (B) components include:
- Organohydrogen polysiloxane resin containing M^{H} units, M units, and Q units,
- Organohydrogen polysiloxane resin containing M^{H} units, and/or M units, D^{H} units, and Q units,
- Organohydrogen polysiloxane resin containing M^{H} units, and/or M units, D units, and Q units, and
- Organohydrogen polysiloxane resin containing T^{H} units.

Note, these organohydrogen polysiloxane resins may contain small amounts of other structural units.

More specifically, examples of resinous or three dimensional network (B) components include:
Organohydrogen polysiloxanes containing (CH₃)₂HSiO_{1/2} units and SiO_{4/2} units,
Organohydrogen polysiloxanes containing (CH₃)₃SiO_{1/2} units, (CH₃)HSiO_{2/2} units, and SiO_{4/2} units,
Organohydrogen polysiloxanes containing (CH₃)₂HSiO_{1/2} units, (CH₃)₂SiO_{2/2} units, and SiO_{4/2} units,
Organohydrogen polysiloxanes containing (CH₃)₂HSiO_{1/2} units, SiO_{4/2} units, and (C₆H₅)SiO_{3/2} units, and
Organohydrogen polysiloxanes containing essentially HSiO_{3/2} units and optionally (CH₃)₂HSiO_{1/2} units and (CH₃)₃SiO_{1/2} units.

As component (B), a chain organopolysiloxane having at least three silicon-bonded hydrogen atoms in one molecule is preferable, and thus a three dimensional crosslinked structure can be densely formed with component (A) in the curing reaction of the curable organopolysiloxane composition of the present invention due to the large number of crosslink reaction points. Methylhydrogen polysiloxane capped by trimethylsiloxy groups at both terminals of a molecular chain is preferably used.

Relative to one alkenyl group in all of the components of the curable organopolysiloxane composition, the content of component (B) is a quantity whereby silicon atom-bonded hydrogen atoms are in a range of 0.3 to 10, preferably a range of 0.5 to 3.0, and more preferably a range of 0.8 to 2.0. This is because if the content of the abovementioned SiH group containing component is less than the lower limit of the abovementioned range, the obtained composition becomes no longer sufficiently cured; in contrast, if it exceeds the upper limit of the abovementioned range, the obtained composition may generate hydrogen gas during curing, significantly decreasing the heat resistance of the obtained cured product.

In the curable organopolysiloxane composition of the present invention, the content of component (B) to 100 mass parts of component (A) is 0.1 to 30 mass parts, preferably 0.2 to 20 mass parts, and more preferably 0.5 to 10 mass parts. If component (B) is less than the lower limit of the abovementioned range, the adhesiveness of the obtained composition in a thin layer is insufficient; in contrast, if it exceeds the upper limit of the abovementioned range, the elastic modulus of the composition tends to decrease, while the adhesive strength tends to significantly decrease even upon a cohesive failure. Moreover, if component (B) is less than the abovementioned lower limit, the obtained composition tends to become no longer sufficiently cured; in contrast, if the component exceeds the upper limit of the abovementioned range, the obtained composition may generate hydrogen gas during curing, causing foaming.

### [Components (C) and (D)]

The curable organopolysiloxane compositions of the present invention contain, in addition to the aforementioned components (A) and (B), two different types of curing catalysts:
(C) a hydrosilylation reaction catalyst, and
(D) condensation reaction catalysts or condensation reaction products selected from a group including tetra-tert-butoxy titanium, di(isopropoxy)bis(ethyl acetoacetate)titanium, and aluminum chelate complexes. The technical effects are achieved such that when two such catalysts are used in combination with each of the components, they are easily cured by warming at from room temperature to 80°C, and have excellent adhesiveness to various base materials.

Component (C) is a hydrosilylation reaction catalyst exhibiting activity in the composition and is a component that promotes a hydrosilylation reaction and thereby cures the curable organopolysiloxane composition of the present invention. This manner of component (C) preferably includes a catalyst that promotes the hydrosilylation reaction without irradiation with high-energy rays, but may be used in combination with a photo-active hydrosilylation reaction catalyst that promotes the hydrosilylation reaction by irradiation with high-energy rays, if necessary.

Examples of suitable hydrosilylation reaction catalysts include: platinum based catalysts, rhodium based catalysts, palladium based catalysts, nickel based catalysts, iridium based catalysts, ruthenium based catalysts, and iron based catalysts. Platinum based catalysts are preferable. Examples of platinum based catalysts include: platinum based compounds, such as platinum fine powders, platinum black, platinum-supporting silica fine powders, platinum-supporting activated carbon, chloroplatinic acids, alcohol solutions of chloroplatinic acids, olefin complexes of platinum, alkenylsiloxane complexes of platinum, and the like. Alkenylsiloxane complexes of platinum are particularly preferable. Examples of the alkenylsiloxane include 1,3-divinyl-1,1,3,3-tetramethyldisiloxane, 1,3,5,7-tetramethyl-1,3,5,7-tetravinylcyclotetrasiloxane, alkenylsiloxanes having part of the methyl groups of these alkenylsiloxane substituted by ethyl groups, phenyl groups, or the like, and alkenylsiloxanes having vinyl groups of these alkenylsiloxane substituted by allyl groups, hexenyl groups, or the like. The platinum-alkenyl siloxane complex has favorable stability, and therefore 1,3-divinyl-1,1,3,3-tetramethyldisiloxane is particularly preferable. Furthermore, the stability of the platinum-alkenylsiloxane complex can be improved. Therefore, 1,3-divinyl-1,1,3,3-tetramethyldisiloxane, 1,3-diallyl-1,1,3,3-tetramethyldisiloxane, 1,3-divinyl-1,3-dimethyl-1,3-diphenyldisiloxane, 1,3-divinyl-1,1,3,3-tetraphenyldisiloxane, and 1,3,5,7-tetramethyl-1,3,5,7-tetravinylcyclotetrasiloxane, or other alkenylsiloxane or dimethylsiloxane oligomers or other organosiloxane oligomers are preferably added to the complex, with an alkenylsiloxane particularly preferably added to the complex. An example of other platinum based catalysts includes thermoplastic resin particles containing a platinum based catalyst.

The hydrosilylation reaction catalyst herein is preferably a catalyst that exhibits activity without irradiating with a high energy beam, and a catalyst that exhibits activity even at a relatively low temperature is more preferable. Specific preferred examples include those that exhibit activity in a composition in a temperature range of 0 to 200°C, suitably in a range of 40 to 100°C or less and promote hydrosilylation reaction.

The content of component (C) is the amount of catalyst, which depends on the type of catalyst and the type of composition, but normally the metal atoms in the catalyst are preferably in the range of 0.01 to 100 ppm by mass relative to the curable organopolysiloxane composition and more preferably in the range of 0.1 to 50 ppm.

When component (D) is used in combination with component (C), the curability and adhesiveness to various base materials of the composition according to the present invention in heating at from room temperature to 80°C, can be improved. Specifically, component (D) is a condensation reaction catalyst or condensation reaction product thereof selected from a group including tetra-tert-butoxy titanium, di(isopropoxy)bis(ethyl acetoacetate)titanium, and an aluminum chelate complex and promotes a condensation reaction of the organopolysiloxane for curing. Examples of aluminum chelate complexes include aluminium alkylacetoacetate diisopropoxide, aluminum trisacetylacetonate, and mixtures thereof.

The content of component (D) is an amount of catalyst that depends on the type of catalyst and the type of composition and relative to the total mass of the curable organopolysiloxane composition, is preferably 0.5 mass% or less and more preferably in a range of 0.001 to 0.500 mass%.

Of component (D), di(isopropoxy)bis(ethyl acetoacetate)titanium or condensation reaction products thereof can be expected to sufficiently improve low temperature curing and adhesion even at small amounts, and have the advantage that even at 0.050 mass% or less, or suitably, in a range of 0.001 to 0.050 mass%, sufficient curability and adhesion to metallic base materials such as aluminum can be achieved.

### Component (E)

The curable organopolysiloxane composition of the present invention includes a curing inhibitor as an ingredient to improve storage stability and handling workability and to improve pot life. Examples of component (E) include: acetylene based compounds such as 2-Methyl-3-butyne-2-ol, 3,5-Dimethyl-1-hexin-3-ol, 2-phenyl-3-butyne-2-ol, 1-ethynyl-1-cyclohexanol, 1-ethynyl-2-cyclohexanol, and the like; enyne compounds such as 3-methyl-3-pentene-1-in, 3,5-dimethyl-3-hexene-1-in, and the like; 1,3,5,7-tetramethyl-1,3,5,7-tetravinylcyclotetrasiloxane, 1,3,5,7-tetramethyl-1,3,5,7-tetrahexenylcyclotetrasiloxane, and triazoles such as benzotriazole, phosphines, mercaptans, and hydrazines.

The content of component (E) should be suitably selected based on curing conditions of the curable organopolysiloxane composition of the present invention and relative to the total mass of the curable organopolysiloxane composition, is preferably 0.001 to 1.0 mass% and more preferably 0.01 mass% to 0.8 mass%. In particular, the content of the compound having an intramolecular carbon-carbon triple bond in component (E) is preferably 0.001 to 0.5 mass% relative to the total mass of the curable organopolysiloxane composition and more preferably 0.01 to 0.3 mass%.

### [Component (F)]

Component (F) is a trialkoxysilyl containing siloxane having one silicon atom-bonded hydrogen atom and at least one trialkoxysilyl group per one molecule, in addition to also being an arbitrary component which achieves firm and flexible adhesion to base materials in terms of both adhesiveness at low temperatures and adhesive form in small amounts. Component (F) has a trialkoxysilyl group, accordingly providing superior reactivity, with multiple condensation reaction functional groups reacting simultaneously. Therefore, in contrast to an organohydrogen polysiloxane having a hydroxyl group and alkoxy group, adhesiveness is advantageously significantly improved even if the curing reaction is performed at a low temperature for a short period of time.

Because this trialkoxysilyl containing siloxane has silicon atom-bonded hydrogen atoms in one molecule, it reacts with component (A) together with other crosslinking agents (component (B)) during the curing reaction and is incorporated into the cured product. Here, component (F) may be pre-mixed at least in part with component (A) in a pre-mix addition reaction, or may be blended as a separate component. Moreover, the trialkoxysilyl group is preferably a trimethoxysilyl group or triethoxysilyl group, where a group other than the silicon atom-bonded hydrogen atoms and alkoxysilyl group in component (F) is preferably a non-reactive functional group selected from an alkyl group or aryl group.

Suitably, component (F) is an alkoxysilyl containing siloxane having a silicon atom-bonded hydrogen atom and alkoxysilyl group at both terminals of a polysiloxane expressed by the following formula. 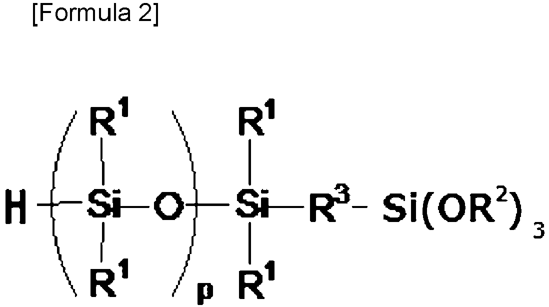 (where R¹ is the same or different monovalent hydrocarbon group not having an aliphatic unsaturated bond, R² is an alkyl group, R³ is an alkylene group, and p is an integer of from 1 to 50).

In the above formula, R¹ represents the same or different monovalent hydrocarbon group not having an aliphatic unsaturated bond, with examples thereof including: alkyl groups such as a methyl group, ethyl group, propyl group, butyl group, pentyl group, hexyl group, heptyl group, octyl group, nonyl group, decyl group, or octadecyl group; cycloalkyl groups such as a cyclopentyl group or cyclohexyl group; aryl groups such as a phenyl group, tolyl group, xylyl group, or naphthyl group; aralkyl groups such as a benzyl group, phenethyl group, or phenylpropyl group; and halogenated alkyl groups such as a 3-chloropropyl group or a 3,3,3-trifluoropropyl group, with an alkyl group or aryl group being preferable, and with a methyl group or phenyl group being particularly preferable. Moreover, in the above formula, R² is an alkyl group, with examples thereof including a methyl group, ethyl group, propyl group, butyl group, pentyl group, and hexyl group, with a methyl group or ethyl group being preferable. R³ is an alkylene group, preferably an alkylene group having a carbon number of 2 to 10, particularly preferably an ethylene group or propylene group. Moreover, in the above formula, p is an integer of 1 to 50, preferably an integer of 1 to 10, particularly preferably an integer of 1 to 5.

Examples of component (F) include alkoxysilyl containing siloxanes expressed by the formula: 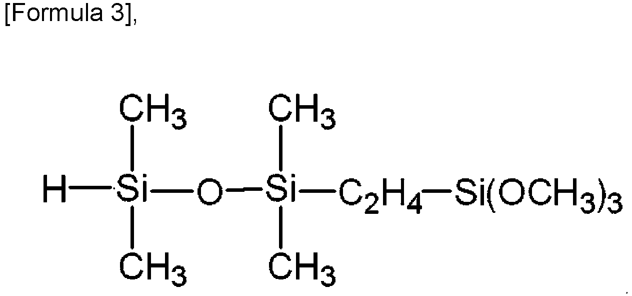 alkoxysilyl containing siloxanes expressed by the formula: 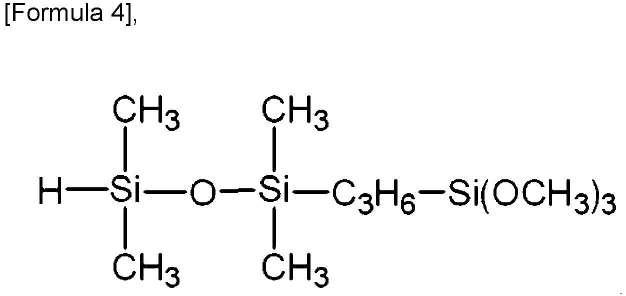 alkoxysilyl containing siloxanes expressed by the formula: 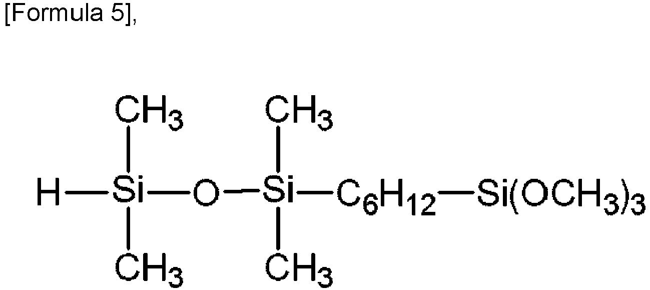 and alkoxysilyl containing siloxanes expressed by the formula:

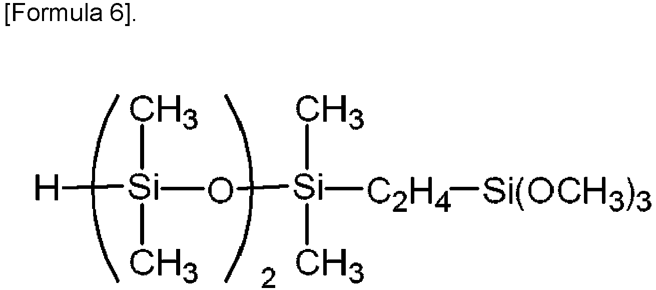

One of these alkoxysilyl containing siloxanes may be used or two or more thereof may be used in combination, or part or all of methyl groups may be substituted with other alkyl groups, halogenated alkyl groups, aryl groups, or the like.

In terms of the technical effects, component (F) is suitably a trimethoxysilyl group containing disiloxane expressed by the formula:

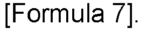

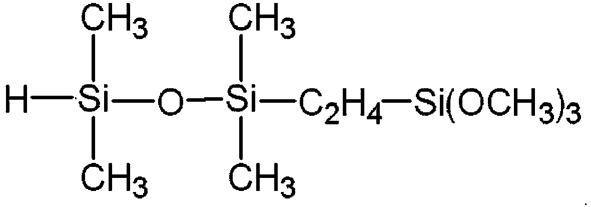

More specifically, relative to the overall curable organopolysiloxane composition, the content of the organopolysiloxane having an alkoxysilyl containing group expressed by the general formula with at least one silicon atom bond per molecule: 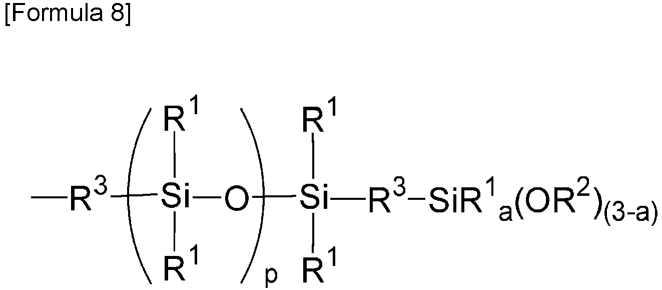 (wherein, R¹ is the same or different monovalent hydrocarbon group not having an aliphatic unsaturated bond, R² is an alkyl group, R³ is the same or different alkylene group, a is an integer of 0 to 2, and p is an integer of 1 to 50) is less than 5.0 mass%, suitably less than 3.0 mass%, and more suitably less than 1.0 mass%.

Most suitably, the composition according to the present invention does not contain organopolysiloxane having an alkoxysilyl containing group similar to that described above. Note that in the examples of functional groups described above, R¹, R², and R³, a and p are the same as each of the functional groups in component (F).

Relative to the total mass of the curable organopolysiloxane composition, the content of component (F) is preferably 0.05 to 10 mass% and more preferably 0.1 to 5.0 mass%.

### [Component (G)]

Component G is a component that imparts favorable adhesion to the crosslinked product of the composition described above differing from component (F) and is suitably at least one type of adhesion promoting agent selected from a group including:
(i) a siloxane having at least one each of a silicon atom-bonded alkenyl group or a silicon atom-bonded hydrogen atom and a silicon atom-bonded alkoxy group per molecule;
(ii) an organosiloxane having at least one each of a silicon atom-bonded alkenyl group, a silicon atom-bonded alkoxy group, and a silicon atom-bonded epoxy-containing monovalent organic group per molecule;
(iii) a mixture or reaction mixture of a silane or siloxane having at least one silicon atom-bonded alkoxy group per molecule and an organosiloxane having at least one each of a silicon atom-bond hydroxy group and a silicon atom-bonded alkenyl group per molecule;
(iv) a mixture or reaction mixture of an organosilane or organosiloxane having at least one each of a silicon atom-bonded alkoxy group and a silicon atom-bonded epoxy group-containing monovalent organic group per molecule and an organosiloxane having at least one each of a silicon atom-bonded hydroxy group and a silicon atom-bonded alkenyl group per molecule;
(v) an alkoxyalkoxysilane; and
(vi) a silane or alkane having at least one terminal trialkoxysilyl group that does not correspond to component (F) or (v).

Of component (G), examples of the molecular structure of the siloxane having at least one each of a silicon atom-bonded alkenyl group or a silicon atom-bonded hydrogen atom and a silicon atom-bonded alkoxy group include: straight chain, partially branched straight chain, branched chain, cyclic, and network, where straight chain, branched chain, or network are particularly preferable. Examples of silicon atom-bonded alkenyl groups in this siloxane include: a vinyl group, an allyl group, a butenyl group, a pentenyl group, and a hexenyl group, with a vinyl group being preferable. In addition, examples of the silicon atom-bonded alkoxy group in this siloxane include: methoxy groups, ethoxy groups, propoxy groups, butoxy groups, and methoxyethoxy groups, with methoxy groups being preferable. In addition, examples of silicon atom-bonded groups other than alkenyl groups, hydrogen atoms, and alkoxy groups in this siloxane include: alkyl groups such as methyl groups, ethyl groups, propyl groups, butyl groups, pentyl groups, hexyl groups, heptyl groups, and the like; aryl groups such as phenyl groups, tolyl groups, xylyl groups, naphthyl groups, and the like; aralkyl groups such as benzyl groups, phenethyl groups, and the like; halogenated alkyl groups such as chloromethyl groups, 3-chloropropyl groups, 3,3,3-trifluoropropyl groups, and the like and other substituted or unsubstituted monovalent hydrocarbon groups; glycydoxyalkyl groups such as 3-glycidoxypropyl groups, 4-glycidoxybutyl groups, and the like; (3,4-epoxycyclohexyl) alkyl groups such as 2- (3,4-epoxycyclohexyl) ethyl groups, 3- (3,4-epoxycyclohexyl) propyl groups, and the like; oxylanyl alkyl groups such as 4-oxylanyl butyl groups, 8-oxylanyl octyl groups, and the like; and other epoxy containing monovalent organic groups, and due to enabling imparting of favorable adhesion with respect to various types of base materials, having at least one epoxy containing monovalent organic group per molecule is preferable. The viscosity of this manner of siloxane is not restricted, but is preferably 1 to 500 mPa-s at 25°C.

In addition, of component (G), regarding the mixture of silanes or siloxanes with at least one silicon atom-bonded alkoxy group per molecule and organosiloxanes having at least one silicon atom-bond hydroxy group and silicon atom-bonded alkenyl group per molecule, examples of the alkoxy groups bonded to silicon atoms in the former, or silanes, include: methoxy groups, ethoxy groups, propoxy groups, and methoxyethoxy groups, and methoxy groups particularly preferable. Also, in addition to the alkoxy group described above, the silicon atom of this silane may contain at least one group selected from: alkyl groups such as methyl groups, ethyl groups, propyl groups, butyl groups, pentyl groups, hexyl groups, heptyl groups, and the like; alkenyl groups such as vinyl groups, allyl groups, butenyl groups, pentenyl groups, hexenyl groups, and the like; aryl groups such as phenyl groups, tolyl groups, xylyl groups, naphthyl groups, and the like; aralkyl groups such as benzyl groups, phenethyl groups, and the like; halogenated alkyl groups such as chloromethyl groups, 3-chloropropyl groups, 3,3,3-trifluoropropyl groups, and the like; and other substituted or unsubstituted monovalent hydrocarbon groups; glycydoxyalkyl groups such as 3-glycidoxypropyl groups, 4-glycidoxybutyl groups, and the like; (3,4-epoxycyclohexyl) alkyl groups such as 2-(3,4-epoxycyclohexyl) ethyl groups and 3-(3,4-epoxycyclohexyl) propyl groups, and the like; oxylanyl alkyl groups such as 4-oxylanyl butyl groups, 8-oxylanyl octyl groups, and the like; and other epoxy containing monovalent organic groups, and due to imparting favorable adhesion to various base materials, having at least one epoxy containing monovalent organic group in the molecule is preferable.

In addition, examples of the molecular structure of the former, or siloxane, include: straight chain, partially branched straight chain, branched chain, cyclic, and network and in particular, straight chain, branched chain, and network are preferable. Examples of the alkoxy group bonded to a silicon atom in this siloxane include: methoxy groups, ethoxy groups, propoxy groups, butoxy groups, and methoxyethoxy groups, with methoxy groups being preferable. Also, in addition to the alkoxy group described above, the silicon atom of this siloxane may contain at least one group selected from: alkyl groups such as methyl groups, ethyl groups, propyl groups, butyl groups, pentyl groups, hexyl groups, heptyl groups, and the like; alkenyl groups such as vinyl groups, allyl groups, butenyl groups, pentenyl groups, hexenyl groups, and the like; aryl groups such as phenyl groups, tolyl groups, xylyl groups, naphthyl groups, and the like; aralkyl groups such as benzyl groups, phenethyl groups, and the like; halogenated alkyl groups such as chloromethyl groups, 3-chloropropyl groups, 3,3,3-trifluoropropyl groups, and the like; and other substituted or unsubstituted monovalent hydrocarbon groups; glycydoxyalkyl groups such as 3-glycidoxypropyl groups, 4-glycidoxybutyl groups, and the like; (3,4-epoxycyclohexyl) alkyl groups such as 2-(3,4-epoxycyclohexyl) ethyl groups and 3-(3,4-epoxycyclohexyl) propyl groups, and the like; oxylanyl alkyl groups such as 4-oxylanyl butyl groups, 8-oxylanyl octyl groups, and the like; and other epoxy containing monovalent organic groups, and due to imparting favorable adhesion to various base materials, having at least one epoxy containing monovalent organic group in the molecule is preferable. The viscosity of this manner of siloxane is not restricted, but is preferably 1 to 500 mPa-s at 25°C.

In addition, examples of the molecular structure of the latter, or organosiloxane, include: straight chain, partially branched straight chain, branched chain, cyclic, and network and in particular, straight chain, branched chain, and network are preferable. Examples of alkenyl groups bonded to silicon atoms in this organosiloxane include: a vinyl group, an allyl group, a butenyl group, a pentenyl group, and a hexenyl group, with a vinyl group being preferable. Examples of groups bonding to the silicon atoms other than hydroxy groups and alkenyl groups in the organosiloxane include: alkyl groups such as methyl groups, ethyl groups, propyl groups, butyl groups, pentyl groups, hexyl groups, heptyl groups, and the like; aryl groups such as phenyl groups, tolyl groups, xylyl groups, naphthyl groups, and the like; aralkyl groups such as benzyl groups and phenethyl groups; halogenated alkyl groups such as chloromethyl groups, 3-chloropropyl groups, and 3,3,3-trifluoropropyl groups; and other substituted or unsubstituted monovalent hydrocarbon groups. The viscosity of this manner of organosiloxane is not restricted, but is preferably 1 to 500 mPa-s at 25°C.

The ratio of silanes or siloxanes having at least one silicon atom-bonded alkoxy group in one molecule to organosiloxanes having at least one silicon atom-bonded hydroxy group and one silicon atom-bonded alkenyl group in one molecule is not restricted but the weight ratio of the former silane or siloxane to the latter organosiloxane should be within the range of 1/99 to 99/1 based on imparting particularly favorable adhesion.

A reaction mixture of alkoxysilane having an organic group containing an amino group and alkoxysilane having an organic group containing an epoxy group can be used as the adhesive agent of the present invention, and the reaction ratio preferably has a mol ratio in the range of (1:1.5) to (1:5) and in particular, preferably in the range of (1:2) to (1:4). This component can be easily synthesized by mixing alkoxysilane having an amino group containing organic group and alkoxysilane having an epoxy group containing organic group as described above to cause them to react at room temperature or by heating.

In particular, when an alkoxysilane having an amino group containing organic group is reacted with an alkoxysilane having an epoxy group containing organic group by the method described in JP 10-195085 A, the present invention particularly preferably contains a carbasilatrane derivative obtained by cyclizing based on an alcohol exchange reaction and is represented by the general formula: 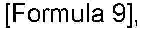 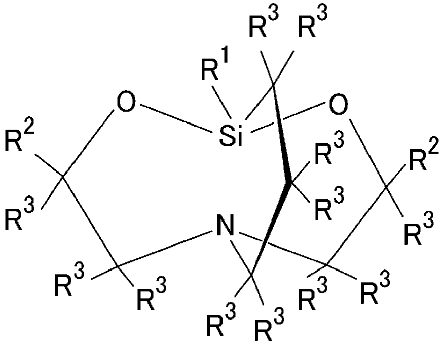 {where R¹ is an alkyl group or an alkoxy group, R² is the same or different group selected from the group consisting of groups expressed by the general formula: 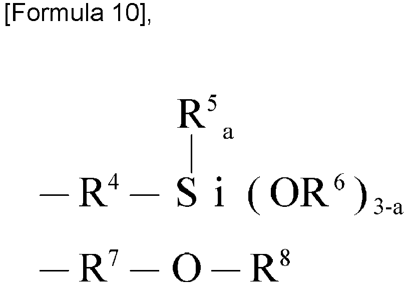 (where R⁴ is an alkylene group or alkyleneoxyalkylene group, R⁵ is a monovalent hydrocarbon group, R⁶ is an alkyl group, R⁷ is an alkylene group, R⁸ is an alkyl group, alkenyl group, or acyl group, and a is 0, 1, or 2), and R³ is the same or different hydrogen atom or alkyl group}.

Examples of carbasilatrane derivatives may include: a silatrane derivative having an alkenyl group and silicon atom-bonded alkoxy group in the molecule expressed by the following structure.

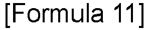

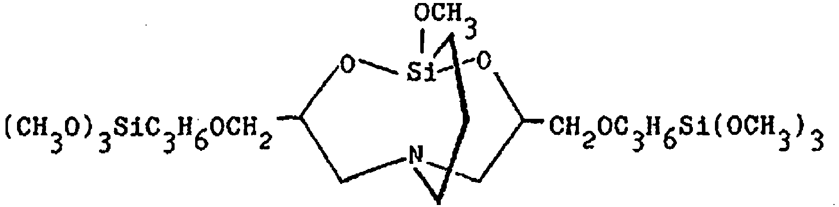

The component is an organic compound having at least two alkoxysilyl groups per one molecule, in addition to containing bonds other than a silicon-oxygen bond between these silyl groups, and serves to independently improve initial adhesiveness and improve the adhesive durability of a cured product including this adhesion promoting agent under harsh conditions particularly when used in combination with other adhesive agents.

The alkoxyalkoxysilane that is component (G) is a component that is a silane coupling agent or crosslinking agent for a condensation reaction and is a component selected from alkoxy trialkoxysilanes, dialkyldialkoxysilanes, and trialkylalkoxysilanes. Specifically, methyltrimethoxysilanes, hexyltrimethoxysilanes, octyltrimethoxysilanes, decyltrimethoxysilanes or similar products are suitable examples.

Examples of a silane or alkane having at least one terminal trialkoxysilyl group, not corresponding to component (F) or the alkylalkoxysilane described above include: 3-glycidoxyprolyltrimethoxysilane2-(3,4-epoxycyclohexyl)ethyl trimethoxysilane, bis(trimethoxysilyl)ethane, 1,2-bis(trimethoxysilyl)ethane, 1,2-bis(triethoxysilyl)ethane, 1,1-bis(trimethoxysilyl)ethane, 1,4-bis(trimethoxysilyl)butane, 1,4-bis(triethoxysilyl)butane, 1-methyldimethoxysilyl-4-trimethoxysilylbutane, 1-methyldiethoxysilyl-4-triethoxysilylbutane, 1,5-bis(trimethoxysilyl)pentane, 1,5-bis(triethoxysilyl)pentane, 1,4-bis(trimethoxysilyl)pentane, 1,4-bis(triethoxysilyl)pentane, 1-methyldimethoxysilyl-5-trimethoxysilylpentane, 1-methyldiethoxysilyl-5-triethoxysilylpentane, 1,6-bis(trimethoxysilyl)hexane, 1,6-bis(triethoxysilyl)hexane, 1,4-bis(trimethoxysilyl)hexane, 1,5-bis(trimethoxysilyl)hexane, 2,5-bis(trimethoxysilyl)hexane, 1-methyldimethoxysilyl-6-trimethoxysilylhexane, 1-phenyldiethoxysilyl-6-triethoxysilylhexane, 1,7-bis(trimethoxysilyl)heptane, 2,5-bis(trimethoxysilyl)heptane, 2,6-bis(trimethoxysilyl)heptane, 1,8-bis(trimethoxysilyl)octane, 2,5-bis(trimethoxysilyl)octane, 2,7-bis(trimethoxysilyl)octane, 1,9-bis(trimethoxysilyl)nonane, 2,7-bis(trimethoxysilyl)nonane, 1,10-bis(trimethoxysilyl)decane, 3,8-bis(trimethoxysilyl)decane, methyltrimethoxysilane, methyltriethoxysilane, ethyltrimethoxylane, ethyltriethoxysilane, vinyltrimethoxysilane, phenyltrimethoxysilane, 3-methacryloxypropyltrimethoxysilane, 3-methacryloxypropyltriethoxysilane, and 3-acryloxypropyltrimethoxysilane.

The content of component (G) is an amount sufficient to impart favorable adhesion to the crosslink product of the composition described above and, for example, is preferably in the range of 0.01 to 20 mass parts with respect to 100 mass parts of component (A), in particular, preferably in the range of 0.1 to 10 mass parts. This is because if the amount of component (G) is less than this range, the adhesive properties of the cured product tend to decrease, while if the amount exceeds this range, the adhesive properties are not affected, but rather the stability of the resulting silicone elastomer tends to decrease.

### [Component (H)]

The curable organopolysiloxane composition of the present invention may optionally further contain (H) an inorganic filler. If included, this manner of inorganic filler should preferably be one or more types selected from a reinforcing filler, thermally conductive filler, and an electrically conductive filler. In particular, the curable organopolysiloxane compositions of the present invention have an advantage of having favorable adhesion to resins and metal base materials at low temperatures and short curing reaction times, even when a large amount of inorganic fillers, especially thermally conductive fillers or electrically conductive fillers such as silver powder or silver-coated fine particles are mixed in.

The reinforcing filler is a component for imparting mechanical strength to the silicone rubber cured product obtained by curing the curable organopolysiloxane composition of the present invention and improving performance as a protective agent or an adhesive. Examples of such reinforcing fillers include: inorganic fillers such as fumed silica fine powder, precipitated silica fine powder, calcined silica fine powder, fumed titanium dioxide fine powder, quartz fine powder, calcium carbonate fine powder, diatomaceous earth fine powder, aluminum oxide fine powder, aluminum hydroxide fine powder, zinc oxide fine powder, and zinc carbonate fine powder. The reinforcing fillers may contain inorganic fillers obtained by surface treating these inorganic fillers with a treating agent such as organoalkoxysilanes such as methyltrimethoxysilane; organohalosilanes such as trimethylchlorosilane; organosilanes such as hexamethyldisilazane; siloxane oligomers such as α,ω-silanol group-capped dimethylsiloxane oligomer, α,ω-silanol group-capped methylphenylsiloxane oligomer, and α,ω-silanol group-capped methylvinylsiloxane oligomer, and the like.

While not particularly limited thereto, the particle diameter of fine powder of the reinforcing filler may be, for example, within the range of 0.01 µm to 1000 µm at the median diameter based on the laser diffraction/scattering type particle size distribution measurement.

The content of the reinforcing filler is not limited, but is preferably 0.1 to 200 mass% and more preferably 1 to 100 mass%, relative to the total mass of the curable organopolysiloxane composition excluding component (H).

The optional thermally conductive filler or electrically conductive filler is a component that imparts thermal conductivity or electrical conductivity to the silicone rubber cured product obtained by curing the curable organopolysiloxane composition of the present invention, and is preferably at least one type of powder and/or fiber selected from the group consisting of pure metals, alloys, metal oxides, metal hydroxides, metal nitrides, metal carbides, metal silicates, carbon, soft magnetic alloys and ferrites, and metal powder, metal oxide powder, metal nitride powder, or carbon powder are suitable.

Pure metals include: bismuth, lead, tin, antimony, indium, cadmium, zinc, silver, copper, nickel, aluminum, iron and silicon metal. Alloys include: an alloy including two or more metals selected from the group consisting of bismuth, lead, tin, antimony, indium, cadmium, zinc, silver, aluminum, iron and silicon metal. Metal oxides include: alumina, zinc oxide, silicon oxide, magnesium oxide, beryllium oxide, chromium oxide and titanium oxide. Metal hydroxides include: magnesium hydroxide, aluminum hydroxide, barium hydroxide, and calcium hydroxide. Metal nitrides include: boron nitride, aluminum nitride and silicon nitride. Metal carbides include: silicon carbide, boron carbide and titanium carbide. Metal silicides include: magnesium silicide, titanium silicide, zirconium silicide, tantalum silicide, niobium silicide, chromium silicide, tungsten silicide and molybdenum silicide. Carbons include: diamond, graphite, fullerene, carbon nanotubes, graphene, activated carbon and amorphous carbon black. Soft magnetic alloys include: Fe-Si alloy, Fe-AI alloy, Fe-Si-Al alloy, Fe-Si-Cr alloy, Fe-Ni alloy, Fe-Ni-Co alloy, Fe-Ni-Mo alloy, Fe-Co alloy, Fe-Si-Al-Cr alloy, Fe-Si-B alloy, and Fe-Si-Co-B alloy. Ferrites include: Mn-Zn ferrite, Mn-Mg-Zn ferrite, Mg-Cu-Zn ferrite, Ni-Zn ferrite, Ni-Cu-Zn ferrite and Cu-Zn ferrite. Further, examples thereof include fine powder obtained by depositing or plating a metal such as gold, silver, nickel, and copper or the like on the surface of fine powder such as ceramic, glass, quartz, or organic resin or the like.

Note, silver powder, glass coated with a metal such as silver, fine powder such as aluminum oxide, aluminum powder, aluminum oxide powder, zinc oxide powder, aluminum nitride powder, or graphite are suitable. When electrical insulation is required for the present composition, a metal oxide powder or a metal nitride powder is preferable, and in particular, aluminum oxide powder, zinc oxide powder, or aluminum nitride powder is preferable.

The particle shape of the thermally conductive filler or electrically conductive filler is not particularly limited, and examples thereof include spherical, needle-like, disc-like, rod-like, and irregular particle shapes. Among these, spherical and irregular shapes are preferable. The average particle diameter of component (H) is not particularly limited, but is preferably in the range of 0.01 to 500 µm, and more preferably in the range of 0.01 to 300 µm.

The thermally conductive filler or the electrically conductive filler is preferably heated and mixed with component (F) and the like described above at a temperature of 100 to 200°C under reduced pressure. In particular, component (F) is a siloxane having an alkoxysilyl containing group, and in some cases, surface treatment of a thermally conductive filler or an electrically conductive filler can provide a composition having a low viscosity and excellent handling workability even if it is highly filled.

The blend amount of this manner of thermally conductive filler or electrically conductive filler is not particularly limited, but is preferably 0.1 to 3,000 mass% and more preferably 1 to 1,500 mass% with respect to the total mass of the curable organopolysiloxane composition excluding component (H). This is because even if the composition of the curable organopolysiloxane composition including components (A) to (E) of the present invention includes large amounts of thermally conductive filler or electrically conductive filler, in particular through combined use of component (C) and component (D), favorable adhesion to base materials can be achieved through a curing reaction at low temperature and over a short period.

The curable organopolysiloxane composition may also optionally contain an organic solvent such as toluene, xylene, acetone, methyl ethyl ketone, methyl isobutyl ketone, hexane, and heptane; a non-crosslinkable diorganopolysiloxane such as α,ω-trimethylsiloxy group-capped dimethylpolysiloxane, and α, w-trimethylsiloxy group-capped methylphenylpolysiloxane; a flame retardant such as carbon black; an antioxidant such as hindered phenol-type antioxidants; a heat resistant agent such as iron oxide; a plasticizer such as dialkylsiloxane oligomers capped at both molecular chain terminals with hydroxydialkylsiloxane groups; and additionally, a pigment, a thixotropic agent, and an antifungal agent, as long as the object of the present invention is not impaired.

The curable organopolysiloxane composition according to the present invention can be produced by uniformly mixing the organopolysiloxanes, two different curing catalysts, an adhesion promoting agent, and any other component. Although a conventionally known method can be used for mixing each component of the organopolysiloxane composition and is not particularly limited, a uniform mixture is generally achieved by simple stirring. Moreover, if a solid component such as an inorganic filler is contained as an arbitrary component, mixing using a mixing device is more preferable. While not particularly limited thereto, examples of mixing devices include: a single or twin shaft continuous mixer, double roller, Ross mixer, Hobart mixer, dental mixer, planetary mixer, kneader mixer, Henschel mixer, a cartridge mixer, and the like.

The curable organopolysiloxane composition of the present invention can be used as a one-component curable organopolysiloxane composition and is stable and durable even when stored in a one-component state.

Specifically, the curable organopolysiloxane composition of the present invention can be produced by uniformly mixing components (A) through (E), and components (F) through (H) as needed, as well as other optional components under a moisture barrier. The curable organopolysiloxane compositions thus produced can quickly be cured by heating from room temperature to 80°C to form silicone rubber.

The curable organopolysiloxane composition of the present invention is favorably adhered to various adherends or base bodies. Examples of adherends or base bodies include: adherends or base bodies such as glass, ceramic, mortar, concrete, wood, aluminum, copper, brass, zinc, silver, stainless steel, iron, galvanized iron, tin plate, nickel plating surface, epoxy resin, phenol resin, and the like. In addition, examples of an adherend or a base body of a thermoplastic resin include: a polycarbonate resin, a polyester resin, an ABS resin, a nylon resin, a polyvinyl chloride resin, a polyphenylene sulfide resin, a polyphenylene ether resin, or a polybutylene terephthalate resin. Moreover, if firmer adhesiveness is required, the abovementioned adhesion promoter may be mixed in, and in addition, an appropriate primer may be applied to the surfaces of these adherends or base bodies, with the curable organopolysiloxane composition according to the present invention capable of being adhered to the primer application surface.

The method of applying the curable organopolysiloxane composition of the present invention to the adherend or base body is not limited and can be done by coating or dispensing. For example, a method of coating such as gravure coating, offset coating, offset gravure, roll coating, air knife coating, curtain coating, comma coating, bar coating or the like can be used, or a dispenser using a dispensing method such as a syringe method, volumetric metering, a non-contact method, a tubing method, or a plunger method to apply a small amount of composition in a specific location can be used.

The curable organopolysiloxane composition according to the present invention is suitable as a building member and as a sealing material, potting material, sealing material, or adhesive of electrical or electronic components and automotive components. Specifically, the composition can suitably be used as a sealing agent for adhering glass, a sealing material of a bathtub unit, an adhesive and sealing material for illumination parts of a vehicle such as an automobile, a protective agent or adhesive of electrical or electronic components (sealing material, coating material, potting agent, or adhesive), and the like.

The curable organopolysiloxane composition according to the present invention has an excellent effect of improving initial adhesiveness to various base materials it contacts during curing, particularly to metal base materials such as an uncleaned aluminum die cast, organic resins such as polybutylene terephthalate (PBT) resin, polyphenylene sulfide (PPS) resin, and polycarbonate (PC) resin, has particularly excellent adhesive durability and can achieve high adhesive strength after curing, and accordingly is particularly useful as a protective agent or adhesive composition of electrical or electronic components. Since the curable organopolysiloxane compositions of the present invention can be cured at relatively low temperatures, they are particularly suitable for use as protective agents or adhesives for plastic components that do not have heat resistance, adhesives for optical components such as IR filters and camera lenses that are susceptible to deterioration due to deformation, as well as protective agents or adhesives for electrical and electronic components such as motors or coils that use magnets or microphones and speakers and the like that are susceptible to magnetic effects.

In a similar manner, the curable organopolysiloxane composition according to the present invention does not have a problem with poor curing even if a large amount of inorganic filler, in particular, a large amount of thermally conductive filler or electrically conductive filler such as silver powder or micro-particles coated with silver is mixed in, and excels at providing an improvement effect of initial adhesion to various base materials the composition comes into contact with during the curing process. After curing, the composition has superior adhesion durability and can achieve high adhesive strength and so is useful as a thermally conductive or electrically conductive curable composition (for example, protective agent or adhesive similar to that described above).

The curable organopolysiloxane composition of the present invention can be cured at relatively low temperatures, and can be cured at 80°C or lower. Although the curable silicone composition of the present invention can be cured at room temperature or by heating, heating at a low temperature is preferable to achieve rapid curing. The heating temperature should be in the range of room temperature to 100°C, more preferably 40 to 80°C. Note, the curable organopolysiloxane composition of the present invention has the advantage that a favorable curing reaction can proceed even at temperatures that do not exceed 120°C, and that initial adhesion and strong adhesion strength can be achieved. Furthermore, as described below, the curable organopolysiloxane composition of the present invention can be stored stably as a one-component composition at low temperatures (especially -20°C to 5°C).

### One-Component Compositions

The curable organopolysiloxane composition of the present invention is a one-component composition in which all components are pre-mixed so that even without utilizing a multi-component formulation such as separating a catalyst or the like that is the curing agent, stable storage and use is feasible as a one-component composition at low temperature while even if cured at roughly 80°C as described above, superior adhesion to base materials can be achieved. This has the advantage of eliminating the need for pre-mixing and other processes required for multi-component compositions, simplifying use and problems such as loss of material do not occur. Furthermore, the curable organopolysiloxane composition of the present invention can be stored stably even when pre-mixed packages are formed on a small scale, which has the advantage of providing a stable and economical product for micro-volume applications that require dispensing and use on a small scale.

### [Cured Product]

The present invention also relates to a cured product of the curable organopolysiloxane composition of the present invention. The curable organopolysiloxane of the present invention can be cured to provide a silicone rubber composition with a hardness of 5 or more, preferably 10 to 90 JIS A hardness. In other words, the cured product of the curable organopolysiloxane composition of the present invention has a JIS A hardness of 5 or more and preferably 10 to 90. If the hardness of the cured material of the curable organopolysiloxane composition is in the above range, a cured material with superior adhesive properties can be obtained.

### Protective Agents, Adhesives, and Electronic Devices

The curable organopolysiloxane composition according to the present invention enables the provision of electrical and electronic equipment equipped with the cured product thereof. In particular, due to the abovementioned configuration, characteristically, the present composition, even in small amounts and a thin layer, is firmly initially adhered to an adherend, in addition to being able to achieve high adhesive strength. In addition, despite being a one-component type, an additional feature is ability to cure at low temperatures and achieve strong adhesion. Therefore, an adhesive layer including the curable organopolysiloxane composition according to the present invention has a firm bond to various types of adherends and forms an adhesive/adhesion state (a cohesive failure mode upon forcibly tearing off) which is difficult to tear off by interfacial peeling, and the like. Specifically, the curable organopolysiloxane composition of the present invention is suitable for electrical and electronic devices provided with adhesive or protective layers. Moreover, because the curable organopolysiloxane composition according to the present invention exerts high initial adhesiveness and adhesive strength to the adherend in adhesive forms other than thin layer adhesion, the composition is also useful as a conventionally used thick coating, potting agent, encapsulant, or sealant, and enables the provision of electric/electronic equipment including an adhesive layer or protective layer.

The electrical or electronic components according to the present invention are not particularly limited as long as they can be encapsulated or sealed by the composition, with examples thereof including electronic equipment including an electric circuit or electrode, and the like, where a metal electrode such as silver, copper, aluminum, or gold; or a metal oxide film electrode such as ITO (Indium Tin Oxide); are formed on base materials of glass, epoxy resin, polyimide resin, phenol resin, ceramics, and the like. The protective agent or adhesive including the curable organopolysiloxane composition of the present invention is a one-component type, has excellent handling properties due to low temperature curability, has superior initial adhesion improvement effects, and after curing, can achieve high adhesive strength with particularly superior adhesive durability. Therefore, when used as an adhesive, potting material, coating material, or sealing material for bonding or sealing electrical and electronic components, the reliability and durability of these electrical and electronic components can be improved. In particular, the composition is suitably used as a protective agent or adhesive for plastic components, as an adhesive for optical components, or as an adhesive or protective agent for components such as motors, coils, microphones, and speakers or the like.

The protective agent or adhesive composition for electrical or electronic components according to the present invention is useful as a sealing material of a structural body including metal and/or resin requiring durability, water resistance, and the like, such as peripheral components, onboard component cases, terminal boxes, illumination components, and solar cell modules of electrical or electronic equipment, and has superior initial adhesiveness and adhesive durability, for example, when applied to a circuit board and housing case thereof in the application of power semiconductors such as engine controls (in transport equipment), power/train systems, and air conditioner controls. Further, advantageously, when the composition is also incorporated into onboard electronic parts such as an electronic control unit (ECU) and used under harsh environments, excellent adhesive durability is achieved, while the reliability and durability of these power semiconductors, onboard parts, and the like, as well as water resistance to rainwater, or the like, can be improved. While not particularly limited thereto, in the use method, for example, a shape such as in an elastic sealing material in the waterproof structure of the onboard engine control circuit described in JP 2007-235013 A may be used. Similarly, a sealing material may be used for the purpose of waterproofing in an automobile harness with a terminal described in JP 2009-135105 A, or may be used in a waterproofing agent made of silicone resin in a waterproofing method of an electric wire and a water stop structure of an electric wire described in JP 2012-204016. Further, as described in JP 2002-170978 A, and the like, a sealing resin in a method for connecting a solar cell module, terminal box, and solar cell module may be used.

The protective agent or adhesive for electrical and electronic components of the present invention can be used as a thermally conductive or electrically conductive material. Specifically, the agent is useful as a heat transfer material (thermally conductive member) to be interposed at an interface between a thermal boundary surface of a heat-generating component and a heat-dissipating member such as a heat sink, a circuit board, or the like for cooling of the heat-generating component by heat conduction, and a heat-dissipating structure can be formed with the composition. Here, the type, size, and detailed structure of the heat-generating components are not limited. In addition, depending on the fill amount of the thermally conductive filler, the thermal conductivity may be 2.0 W/mK or higher, suitably 3.5 W/mK or higher, or more suitably 4.0 W/mK or higher. Electrical and electronic devices equipped with this manner of thermally conductive member are not particularly limited, but include, for example: secondary batteries such as cell-based lithium-ion electrode secondary batteries and cell-stack fuel cells; electronic circuit boards such as printed circuit boards; IC chips packaged with optical semiconductor elements such as diodes (LEDs), organic electric field element (organic EL), laser diodes and LED arrays; CPUs used in electronic devices such as personal computers, digital video discs, mobile phones, and smartphones; and LSI chips such as driver ICs and memory, and the like. When used as an electrically conductive material, use for grounding, static eliminating, and as EMI shielding material for electrical and electronic components is feasible.

### [EXAMPLES]

The present invention will be described below by way of examples; however, the present invention is not limited thereto. Moreover, the adhesiveness of the curable organopolysiloxane composition was evaluated by the following method.

### Examples 1 to 4 and Comparative Examples 1 to 3

### <Preparation of the Curable Organopolysiloxane Composition>

The curable organopolysiloxane compositions shown in Table 1 below were prepared. Specifically, components (A-1), (A-2), (A-3 (A-1), (A-2), (B), (E-1), and (E-2) were pre-mixed to form a liquid mixture, and then component (C) was added to the liquid mixture and the mixture was thoroughly stirred and then subjected to a defoaming process. In addition, components (D-1), (D-2), (D-3), (D-4), (F-1), (G-1), (G-2) and (G-3) were mixed and then added to the above mixture using a cartridge mixer. The resulting liquid was placed in a plastic tube sealed by aluminum.

### Evaluation of Curing Behavior

The curable organopolysiloxane composition thus prepared was measured using a moving die rheometer (MDR, made by Alpha Technologies) under conditions of heating for 30 minutes at a temperature of 130°C and this was used as the initial values for T10 and final torque. Thereafter, the uncured curable organopolysiloxane composition was subjected to a temperature of 25 ± 2°C and a humidity of 50 ± 5% for seven days. Upon measuring using the same method, if the T10 was 150% or more than the initial value or if the final torque value was less than 80% of the initial value, it was considered "Not Good"; otherwise, it was considered "OK".

### Evaluation of Adhesion (Failure Mode) in Adhesion Tests

One each of polycarbonate (PC) resin board and polyphenylene sulfide (PPS) resin board were prepared as a multi-layer body. The surface of the multi-layer body was washed with isopropanol and the curable organopolysiloxane composition thus prepared was pressed against a 10 x 10 x 1 mm aluminum die using a Teflon (registered trademark) spacer until a thickness of 360 µm was reached. After heat curing for two hours at 110°C, the composition was set in a die shear tester, cooled under conditions of a temperature of 25 ± 2°C and relative humidity of 50 ± 5%, and was then used to measure the failure mode in an adhesion test.

The failure state of the adhesive after fracture of the adhesion test piece was confirmed. The failure state of the adhesive is divided into three kinds (the failure mode of the adhesive layer): a cohesive failure; thin layer cohesive failure; and interfacial peeling. In the case of an ideal adhesive state, the failure mode is a cohesive failure. Here, "CF," "tCF," and "AF" in the below mentioned Table 1 represent the failure modes of "cohesive failure," "thin layer cohesive failure," and "interfacial peeling," respectively.

In Table 1 below, "PPS" is the result using a polyphenylene sulfide resin plate as the adherend, and "PC" is the result using a polycarbonate resin plate as the adherend. Further, Si-H/Si-Vi in the tables represents the ratio of the number of moles of vinyl groups to the number of moles of silicon atom-bonded hydrogen atoms in the composition.

In Table 1, the components used are as follows. Note that the viscosity is a value measured by a rotary viscometer at 25°C.
(A-1)
   A mixture of 70 mass% dimethylpolysiloxanes capped at both molecular terminals with dimethylvinylsiloxy groups, (viscosity 2,000 mPa-s, Vi content: 0.23 mass%) and 30 mass% siloxane expressed by the formula: (CH₂=CH(CH₃)₂SiO_{0.5})₄((CH₃)₃SiO_{0.5})₄₀(SiO_{2.0})₅₆ (Vi content: 2.0 mass%, average molecular weight: 20,000)
(A-2)
   Dimethylpolysiloxanes capped at both molecular terminals with dimethylvinylsiloxy groups (viscosity: 10,000 mPa-s, Vi content: 0.13 mass%)
(A-3)
   A mixture of 74 mass% dimethylpolysiloxanes capped at both molecular terminals with dimethylvinylsiloxy groups (viscosity: 2,000 mPa-s, Vi content: 0.23 mass%) and 26 mass% fumed silica surface treated with hexamethyldisilazane
(B)
   Methylhydrogen siloxane capped at both molecular terminals with trimethylsiloxy groups (SiH content: 1.6 mass%)
(C)
   1,3-Divinyl-1,1,3,3-tetramethyldisiloxane complex of platinum (mass units of platinum metal: 1.6 mass%)
(D-1)
   Tetra-tert-butoxy titanium
(D-2)
   Acetoalkoxyaluminum diisopropylate (= C18 alkyl group-containing aluminum alkylacetoacetate diisopropoxide) expressed by the following formula 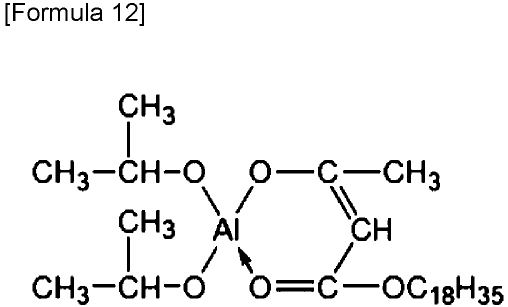
(D-3)
   Titanium diisopropoxide bis(acetylacetonate)
(D-4)
   Zirconium tetra(acetylacetonate)
(E-1)
   1-Ethynyl-2-cyclohexanol
(E-2)
   Tetramethyltetravinylcyclotetrasiloxane
(F-1)
   SiH and trialkoxysilyl group containing siloxane expressed by the following formula (viscosity: 1.6 mPa-s, SiH content: 0.35 mass%) 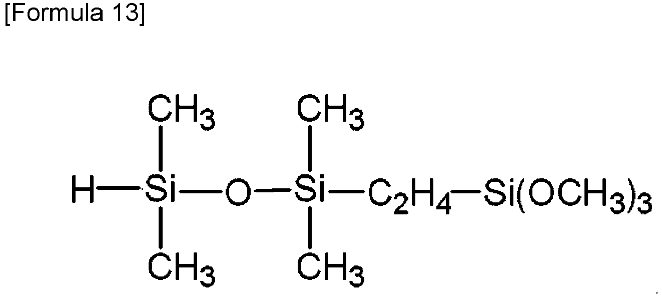
(G-1)
   Condensate of 3-glycidoxyprolyltrimethoxysilane and hydroxysilyl-terminated dimethylmethylvinyl (ratio 1:1, viscosity: 30 mPa-s)
(G-2)
   Hexamethoxysilylhexane
(G-3)
   3-glycidoxyprolyltrimethoxysilane

**[Table 1]**

| Composition, curing behavior, and adhesion of curable organopolysiloxane compositions | | | | | | | | |
|---|---|---|---|---|---|---|---|---|
| Component/blending amount (parts by mass) | | Examples | | | | Comparative Examples | | |
| | | 1 | 2 | 3 | 4 | 1 | 2 | 3 |
| A-1 | | 20.0 | 20.0 | 20.0 | 20.0 | 20.0 | 20.0 | 20.0 |
| A-2 | | 35.80 | 35.70 | 35.70 | 35.70 | 35.70 | 35.70 | 35.70 |
| A-3 | | 40.0 | 40.0 | 40.0 | 40.0 | 40.0 | 40.0 | 40.0 |
| B | | 1.4 | 1.4 | 1.4 | 1.4 | 1.4 | 1.4 | 1.4 |
| C | | 0.16 | 0.16 | 0.16 | 0.16 | 0.16 | 0.16 | 0.16 |
| D-1 | | 0.10 | 0.10 | 0 | 0 | 0 | 0 | 0 |
| D-2 | | 0 | 0 | 0.10 | 0.50 | 0 | 0 | 0 |
| D-3 | | 0 | 0 | 0 | 0 | 0.10 | 0 | 0 |
| D-4 | | 0 | 0 | 0 | 0 | 0 | 0.10 | 0 |
| E-1 | | 0.14 | 0.14 | 0.14 | 0.14 | 0.14 | 0.14 | 0.14 |
| E-2 | | 0.4 | 0.4 | 0.4 | 0.4 | 0.4 | 0.4 | 0.4 |
| F-1 | | 0.5 | 0 | 0.5 | 0.5 | 0.5 | 0.5 | 0.5 |
| G-1 | | 1.0 | 1.0 | 1.0 | 1.0 | 1.0 | 1.0 | 1.0 |
| G-2 | | 0.3 | 0.3 | 0.3 | 0.3 | 0.3 | 0.3 | 0.3 |
| G-3 | | 0.3 | 0.3 | 0.3 | 0.3 | 0.3 | 0.3 | 0.3 |
| Si-H/Si-Vi | | 1.25 | 1.25 | 1.25 | 1.25 | 1.25 | 1.25 | 1.25 |
| Adhesion to PES | Initial | CF | CF | CF | CF | CF | CF | AF |
| | 25°C, 50% RH, after 7 days | CF | CF | AF | AF | CF | Did not harden | AF |
| Adhesion to PC | Initial | CF | CF | CF | CF | CF | CF | CF |
| | 25°C, 50% RH, after 7 days | CF | CF | CF | CF | CF | Did not harden | CF |
| Curing behavior | Initial | OK | OK | OK | OK | OK | OK | OK |
| | 25°C, 50% RH, after 7 days | OK | OK | OK | OK | Not Good | Not Good | OK |

Comparative Examples 1 and 2 use titanium diisopropoxide bis(acetylacetonate) or zirconium tetra(acetylacetonate) as a catalyst for the condensation reaction catalyst, respectively. The curing behavior was inferior in comparison to the case of using the condensation reaction catalyst or condensation reaction product thereof selected from the group consisting of tetra-tert-butoxy titanium and aluminum chelate complexes of the present invention. In addition, the composition of Comparative Example 3, which does not include the condensation reaction catalyst, resulted in interfacial peeling from the initial stage when the failure mode to the PES was evaluated.

On the other hand, the failure modes of the curable organopolysiloxane composition of the present application illustrated in Examples 1 to 4 at 25°C, 50% RH (relative humidity), and after seven days was cohesive failure for PC and cohesive failure for PPS as well. In other words, strong adhesion strength between the adherend is achieved, and the curing behavior is excellent.

### Examples 5 to 7 and Comparative Examples 4 and 5

### <Preparation of the Curable Organopolysiloxane Composition>

The curable organopolysiloxane compositions shown in Table 2 below were prepared. Specifically, components (A-1), (A-2), and (G-1) were pre-mixed to form a mixed solution, and then components (F-2) or (G-4) were added to the mixed solution and the solution was mixed. Next, component (H-2) was added and mixed, component (H-3) was added and mixed, and then component (H-1) was added and mixed. To this mixture, components (B-2) and (E-2) were added and mixed, and finally components (C) and (D-1) or (D-5) were added and mixed. The resulting mixture was degassed, mixed, then placed in a Nordson EFD syringe, and allowed to stand at room temperature for 30 minutes.

### Evaluation of Adhesion (Failure Mode) in Adhesion Tests

Two Alclad plates were used as substrates, the surfaces of the first and second substrates were washed with isopropyl alcohol beforehand, and the prepared curable organopolysiloxane composition was coated on the surface of the first substrate. The second substrate was pressed on top thereof, and after heat curing at 80°C for 1 hour, was left at room temperature for 1 day or 7 hours to cool before being used in adhesion tests to measure the fracture mode.

The failure state of the adhesive after fracture of the adhesion test piece was confirmed. Here, "CF" and "AF" in the below mentioned Table 2 represent the failure modes of "cohesive failure" and "interfacial peeling" respectively.

### Tensile Strength Measurement

The tensile strength of the adhesive test pieces obtained in the evaluation of adhesion (failure mode) was measured in a tensile testing machine (manufactured by Instron) under the conditions of load 1 kN, clamp pressure 60 psi, and speed 2 mm/min.

### Evaluation of Volume Resistivity

The prepared curable organopolysiloxane composition was molded on a 10 x 10 × 0.178 cm flat plate and cured at 80°C for 1 hour and 7 tons of pressure. The volume resistivity of the resulting test pieces was measured using a Signatone Pro4-8000 and KeithlyMeter 2400.

### Evaluation of Stability

After the prepared curable organopolysiloxane compositions were allowed to stand at -18°C for 6 weeks, they were allowed to stand at a temperature of 25 ± 2°C and a humidity of 50 ± 5% to determine whether or not curing will finish with 56 hours. If curing finished within 56 hours, the composition was designated "cures"; if the composition did not cure, it was designated "does not cure".

In Table 2, the components used are as follows.
(A-1)
   A mixture of 70 mass% dimethylpolysiloxanes capped at both molecular terminals with dimethylvinylsiloxy groups, (viscosity 2,000 mPa-s, Vi content: 0.23 mass%) and 30 mass% siloxane expressed by the formula: (CH₂=CH(CH₃)₂SiO_{0.5})₄((CH₃)₃SiO_{0.5})₄₀(SiO_{2.0})₅₆ (Vi content: 2.0 mass%, average molecular weight: 20,000)
(A-2)
   Dimethylpolysiloxanes capped at both molecular terminals with dimethylvinylsiloxy groups (viscosity: 10,000 mPa-s, Vi content: 0.13 mass%)
(B-2)
   Copolymer of dimethylsiloxane and methyl hydrogen siloxane capped at both molecular terminals with dimethylhydrogensiloxy groups with the structural formula: H(CH₃)₂SiO((CH₃)₂SiO)_{3.34}((CH₃)HSiO)_{5.32}Si(CH₃)₂H
(C)
   Platinum-1,3-divinyl-1,1,3,3-tetramethyldisiloxane complex
(D-1)
   Tetra-tert-butoxy titanium
(D-5)
   Di(isopropoxy)bis(ethyl acetoacetate)titanium
(E-2)
   Tetramethyltetravinylcyclotetrasiloxane
(G-1)
   Condensation reaction product of 3-glycidoxyprolyltrimethoxysilane and hydroxysilyl-terminated dimethylmethylvinylsiloxane (ratio 1:1, viscosity: 30 mPa-s)
(F-2)
   Hexamethoxysilylhexane
(G-4)
   Tetraethyl orthosilicate
(H-1)
   Silver flakes, manufactured by Metalor, Inc. Silver RA-0127
(H-2)
   Silver Coated Aluminum, manufactured by Potters Industries
(H-3)
   Silver Coated Glass, manufactured by Potters Industries

**Table 2**

| Composition of curable organopolysiloxane compositions, curing behavior, tensile strength, volume resistivity, and stability. | | | | | | |
|---|---|---|---|---|---|---|
| Component/blending amount (parts by mass) | Examples | | | Comparative Examples | | |
| | 5 | 6 | 7 | 4 | 5 | |
| A-1 | 12.58 | 12.567 | 12.567 | 12.58 | 12.58 | |
| A-2 | 4.74 | 4.735 | 4.735 | 4.74 | 4.74 | |
| B-2 | 1.41 | 1.41 | 1.41 | 1.41 | 1.41 | |
| C | 0.068 | 0.068 | 0.068 | 0.068 | 0.068 | |
| D-1 | 0 | 0 | 0.05 0 | | 0 | |
| D-5 | | 0.025 | 0.003 | 0 | 0 | 0 |
| E-2 | | 0.11 | 0.11 | 0.11 | 0.11 | 0.11 |
| G-1 | | 1.0 | 1.0 | 1.0 | 1.0 | 1.0 |
| F-2 | | 0 | 0 | 0.1 | 0 | 0.1 |
| G-4 | | 0.075 | 0.097 | 0 | 0.1 | 0 |
| H-1 | | 9.41 | 9.40 | 9.40 | 9.41 | 9.41 |
| H-2 | | 47.05 | 47.0 | 47.0 | 47.05 | 47.05 |
| H-3 | | 23.53 | 23.51 | 23.51 | 23.53 | 23.53 |
| Total filler mass% | | 79.99 | 79.99 | 79.91 | 79.99 | 79.99 |
| Si-H/Si-Vi | | 1.31 | 1.31 | 1.31 | 1.31 | 1.31 |
| Tensile strength (MPa) | 80°C, after 1 day | 2.5 ± 0.7 | 0.7 ± 0.2 | 1.2 ± 0.6 | 0.7 ± 0.1 | 0.8 ± 0.3 |
| | 80°C, after 7 days | 4.4 ± 2.1 | 2.0 ± 1.3 | 2.5 ± 0.9 | 0.6 ± 0.1 | 0.6 ± 0.4 |
| Adhesion | 80°C, after 1 day | CF | AF | AF | AF | AF |
| | 80°C, after 7 days | CF | CF | CF | AF | AF |
| Volume resistivity (Ωcm) | 80°C, 1 hr | 0.02 | 0.05 | 0.07 | 0.01 | 0.009 |
| Stability | Within 56 hours | Cured | Cured | Cured | Cured | Cured |

The curable organopolysiloxane composition of the present application indicated in Examples 5 to 7 contain a large amount of various thermally conductive fillers. After heat curing at 80°C (one hour), the mode of failure after 7 days was cohesive failure in all cases. The adhesive strength (= tensile strength) increased over time and the compositions had good adhesion to the Alclad plates used in this evaluation. On the other hand, for the curable organopolysiloxane compositions of Comparative Examples 4 and 5 containing no tetra-tert-butoxy titanium or di(isopropoxy)bis(ethyl acetoacetate)titanium, the adhesive strength did not increase over time. Interfacial peeling occurred even after 7 days, and sufficient improvement in adhesiveness was not observed. Note that for the scope of usage volume for the present application, when tetra-tert-butoxy titanium and di(isopropoxy)bis(ethyl acetoacetate)titanium were used, the compositions maintained favorable curability after being left as a one component preparation at -18°C for six weeks and thus had favorable one component storage stability.

### [INDUSTRIAL APPLICABILITY]

The curable organopolysiloxane compositions of the present invention can be stored as one component and thus have excellent handling properties. In addition, the composition can be cured at relatively low temperatures and can provide superior adhesion. Therefore, the composition can provide favorable adhesive strength even for base materials difficult to adhere to such as resins. In addition, the composition shows superior adhesion even if cured at a low temperature and so is useful as a protective agent or adhesive for plastic components, an adhesive for optical components, or a protective agent or adhesive for components such as a motor, coil, microphone, speaker, or the like. In addition, the curable organopolysiloxane compositions of the present invention can be cured at relatively low temperatures and provide superior adhesion even with large amounts of inorganic filler mixed in and are therefore useful as functional fillers with thermal conductivity or electrical conductivity.

## Claims

1. A one-component curable organopolysiloxane composition, comprising the following components (A) - (E):
(A) an organopolysiloxane having at least two alkenyl groups in each molecule thereof;
(B) an organopolysiloxane having at least two silicon atom-bonded hydrogen atoms in a molecule;
(C) a hydrosilylation reaction catalyst;
(D) a condensation reaction catalyst or a condensation reaction product thereof selected from a group consisting of tetra-tert-butoxy titanium, di(isopropoxy)bis(ethyl acetoacetate)titanium, and an aluminum chelate complex; and
(E) a curing inhibitor;
that when cured, provides a silicone rubber composition with a JIS A hardness of 5 or higher.

2. The curable organopolysiloxane composition of claim 1, wherein component (B) is contained in an amount such that the molar ratio of silicon atom-bonded hydrogen atoms relative to alkenyl groups in the total composition of the curable organopolysiloxane composition is in a range of 0.3 to 10.

3. The curable organopolysiloxane composition according to claim 1 or 2, wherein the content of component (D) is 0.5 mass% or less relative to the total mass of the curable organopolysiloxane composition.

4. The curable organopolysiloxane composition according to any one of claims 1 to 3, wherein the content of the compound having an intramolecular carbon-carbon triple bond in component (E) is 0.001 to 0.5 mass% relative to the total mass of the curable organopolysiloxane composition.

5. The curable organopolysiloxane composition according to any one of claims 1 to 4, further including one silicon atom-bonded hydrogen atom in an (F) molecule and a trialkoxysilyl containing siloxane having at least one trialkoxysilyl group.

6. The curable organopolysiloxane composition according to Claim 5, wherein component (F) is a trialkoxysilyl containing siloxane expressed by the following formula: 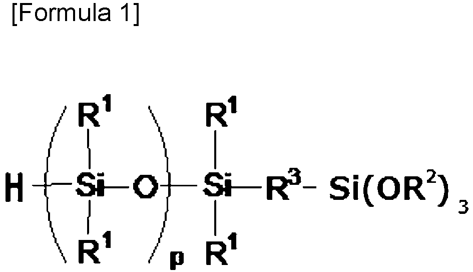 (where R¹ is the same or different monovalent hydrocarbon group not having an aliphatic unsaturated bond, R² is an alkyl group, R³ is an alkylene group, and p is an integer of from 1 to 50).

7. The curable organopolysiloxane composition according to any one of claims 1 to 6, wherein the content of component (D) is 0.05 to 10 mass% relative to the total mass of the curable organopolysiloxane composition.

8. The curable organopolysiloxane composition according to any one of claims 1 to 7, further comprising (G) an adhesion promoting agent.

9. The curable organopolysiloxane composition according to any one of claims 1 to 8, further comprising (H) an inorganic filler.

10. The curable organopolysiloxane composition according to any one of claims 1 to 9, wherein curing is feasible at a temperature of 80°C or less.

11. A protective agent or adhesive for an electrical or electronic component, comprising the curable organopolysiloxane composition according to any one of claims 1 to 10.

12. An electrically conductive or thermally conductive curable composition, comprising the curable organopolysiloxane composition according to any one of claims 1 to 10.

13. A cured product of the curable organopolysiloxane composition according to any one of claims 1 to 10.

14. An electrical or electronic device, comprising a cured product according to claim 13.

15. Electrical or electronic equipment, wherein electrical or electronic components are adhered, encapsulated, sealed, or filled with the curable organopolysiloxane composition according to any one of claims 1 to 10.
